# EUROPÄISCHE PATENTSCHRIFT

(11) **EP 0 630 715 B1**
(45) Veröffentlichungstag und Bekanntmachung des Hinweises auf die Patenterteilung: **08.01.1997**
(21) Anmeldenummer: 94108003.8
(22) Anmeldetag: 24.05.1994
(51) Int. Cl.: B23B 5/16, B23Q 9/00

(54) **Bearbeitungsvorrichtung zum Bearbeiten eines Endes eines Rohres**
Tooling device for working a pipe end
Dispositif d'usinage pour traiter l'extrémité d'un tube

(30) Priorität: 28.05.1993 DE 4317967
(43) Veröffentlichungstag der Anmeldung: 28.12.1994
(73) Patentinhaber: SIEMENS AKTIENGESELLSCHAFT, 80333 München (DE)
(72) Erfinder: Pickl, Egon, Dipl.-Ing. (FH), D-90613 Grosshabersdorf (DE); Erich, Seeberger, Dipl.-Ing. (FH), D-91091 Grossenseebach (DE); Fuchs, Jürgen, Dipl.-Ing. (FH), D-91355 Hiltpolststein (DE)

(56) Entgegenhaltungen:
- EP-A- 0 127 053
- EP-A- 0 255 019
- DE-U- 8 905 157
- US-A- 4 493 232

## Beschreibung

Die Erfindung bezieht sich auf eine Bearbeitungsvorrichtung zum Bearbeiten eines Endes eines Rohres umfassend eine Einstelleinrichtung mit einer am oder im Rohr verspannbaren Spanneinrichtung, wie sie beispielsweise aus dem deutschen Gebrauchsmuster 8905157.2 bekannt ist.

Beim Bau, der Erweiterung oder dem Umbau von Anlagen der technischen Chemie oder von Kraftwerksanlagen ist es häufig notwendig, vor Ort Rohrenden zu bearbeiten. Diese sind Bestandteil von ortsfesten Rohrleitungen oder von angelieferten Rohrstücken, die in die Anlage eingebaut werden sollen. Die Bearbeitung der Rohrenden dient dabei hauptsächlich der Vorbereitung von Verschweißungen.

Aus dem deutschen Gebrauchsmuster 8905157.2 ist eine mobile Bearbeitungsvorrichtung bekannt, die mit Hilfe einer in das Rohrinnere eingeführten Spanneinrichtung am Rohr gehaltert und in der Rohrmittenachse zentriert wird. Die bekannte Spannvorrichtung umfaßt hierzu einen hydraulisch betriebenen Spannkern mit sternförmig ausfahrbaren Teleskopbeinen, die sich an der Rohrinnenseite abstützen. An diesem Spannkern ist die Hauptwelle einer Bearbeitungsmaschine fixiert, die einen Bearbeitungsarm enthält, der auf dieser Hauptwelle über ein in einem Gehäuse befindliches Lager angebracht und um diese Hauptwelle drehbar ist. Der Bearbeitungsarm trägt einen Bearbeitungskopf, der auf einer Radialführung in radialer Richtung hin- und hergefahren werden kann. Der Bearbeitungskopf enthält außerdem eine Axialführung mit einem Axialantrieb, mit dem ein Schlitten axial, d.h. parallel zur Hauptwelle bewegt werden kann. Dieser Schlitten tragt eine Werkzeughaltevorrichtung für ein Werkzeug, beispielsweise einen Drehstahl. Nach dem Ausfahren der Teleskopbeine, d.h. nach dem Fixieren der gesamten Bearbeitungsvorrichtung, ist die Lage der Hauptwelle und damit auch die Orientierung der Bearbeitungsebene sowie die Lage der Bearbeitungsmitte der Bearbeitungsmaschine festgelegt. Durch das sternförmige Ausfahren der Teleskopbeine wird jedoch nur eine annähernde Ausrichtung der Bearbeitungsmaschine auf die Rohrmittenachse ermöglicht. Durch Toleranzen in der Rundheit der Rohre ist eine genaue Zentrierung der Bearbeitungsmitte der Bearbeitungsmaschine auf die Rohrmitte nur möglich, wenn die Teleskopbeine unabhängig voneinander ausgefahren werden können. Eine genaue Zentrierung ist jedoch unter diesen Umständen umständlich und zeitaufwendig. Da außerdem in der Regel nicht davon ausgegangen werden kann, daß die vom Rohrende festgelegte Ebene exakt senkrecht zur Rohrmittenachse verläuft, ist eine Parallelität der sich beim Zentrieren der bekannten Vorrichtung ergebenden Bearbeitungsebene zur Rohrendenebene nicht gewährleistet.

Aus der EP-0 127 053 A3 ist eine Bearbeitungsvorrichtung bekannt, bei der eine im Rohr fixierte Zentriereinrichtung mit einem Kupplungsteil im Rohr derart fixiert wird, daß die Mittenachse des Kupplungsteiles mit der Mittenachse des Rohres zusammenfallt. Dieses Kupplungsteil dient als Halterung für eine Bearbeitungsmaschine, deren Tragachse mit der Mittenachse des Kupplungsteiles zusammenfällt, so daß auch bei dieser bekannten Ausführungsform bei fixierter Zentriervorrichtung eine nachträgliche Justierung der Position der Tragachse der Bearbeitungsmaschine nicht mehr möglich ist.

Der Erfindung liegt nun die Aufgabe zugrunde, eine mobile Bearbeitungsvorrichtung zum Bearbeiten eines Endes eines Rohres anzugeben, die eine einfache und schnelle Einstellung ihrer Bearbeitungsmitte und Bearbeitungsebene relativ zum Rohr ermöglicht.

Die genannte Erfindung wird gelost mit den Merkmalen des Patentanspruches 1. Da die Bearbeitungsvorrichtung eine Einstelleinrichtung enthält, die eine im Rohr verspannbare Spannvorrichtung umfaßt, in der eine erste Halteeinrichtung fixiert ist, in der ein Zwischenteil positionierbar gelagert ist, das wiederum eine ebenfalls positionierbar gelagerte zweite Halteeinrichtung aufnimmt, die eine Bearbeitungsmaschine trägt, kann die Bearbeitungsebene und -mitte der Bearbeitungsmaschine unabhängig von der Position der Spannvorrichtung und insbesondere auch noch nach erfolgtem Verspannen der Spannvorrichtung eingestellt werden.

Durch eine Erhöhung der Anzahl der Freiheitsgrade der positionierbaren Lagerung des Zwischenteils in der ersten Halteeinrichtung sowie der positionierbaren Lagerung der zweiten Halteeinrichtung auf dem Zwischenteil werden die Möglichkeiten zur Einstellung der Bearbeitungsmaschine erhöht. Entsprechende vorteilhafte Ausgestaltungen der Erfindung ergeben sich gemäß der Unteransprüche 2 bis 5.

Weitere bevorzugte konstruktive Ausgestaltungen der Erfindung ergeben sich gemäß der Unteransprüche 6 - 13.

Zur weiteren Erläuterung der Erfindung wird auf die Ausführungsbeispiele der Zeichnung verwiesen, in deren
Figur 1 eine Einstelleinrichtung einer Bearbeitungsvorrichtung gemäß der Erfindung in einem Längsschnitt veranschaulicht ist. In
Figur 2 ist ebenfalls in einem Längsschnitt ein Teil der Einstelleinrichtung in einer gegen die Rohrmittenachse verkippten Position dargestellt.
Figuren 3 und 4 zeigen die Einstelleinrichtung im Bereich der ersten Halteeinrichtung in einem Quer bzw. Längsschnitt.
Figuren 5 und 6 zeigen jeweils weitere vorteilhafte Ausgestaltungen der positionierbaren Lagerung des Zwischenteils in der Halteeinrichtung.

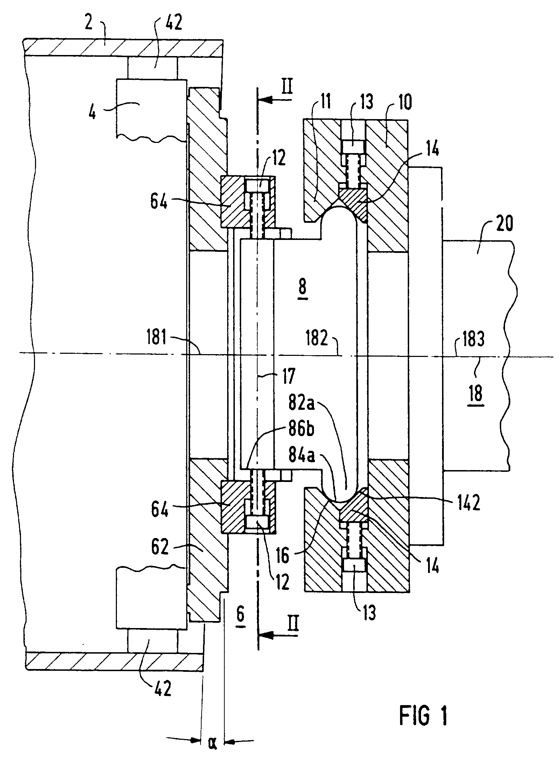

Gemäß **Figur 1** ist am Ende eines Rohres 2 eine Einstelleinrichtung einer Bearbeitungsvorrichtung positioniert. Die Einstelleinrichtung umfaßt eine Spanneinrichtung 4, die in das Rohr 2 eingeführt und mit hydraulisch radial gegen die Innenwand des Rohres 2 ausfahrbaren Spannbacken 42 im Rohr 2 verspannt ist. Die Spanneinrichtung 4 trägt eine Grundplatte 62, die gemeinsam mit auf ihr fixierten Stützleisten 64 und in der Figur nicht sichtbaren Klauen eine erste Halteeinrichtung 6 bildet. Die Stützleisten 64 umschließen gemeinsam mit den Klauen ein stirnseitiges Ende eines Zwischenteils 8, das mit in den Stützleisten 64 geführten Klemmschrauben 12 in der ersten Halteeinrichtung 6 fixiert ist.

Das Zwischenteil 8 hat einen rechteckigen Querschnitt und ist an seinen beiden Stirnseiten jeweis an zwei gegenüberliegenden Seitenkanten mit flanschartigen Vorsprüngen versehen, von denen in der Schnittdarstellung gemäß der Figur nur die Vorsprünge 82a auf der von der ersten Halteeinrichtung 6 abgewandten Stirnseite des Zwischenteils 8 zu sehen sind. Die zu den flanschartigen Vorsprüngen 82a gehörenden seitlichen Randflächen 84a sind konvex gekrümmt und haben ein vorzugsweise kreislinienförmiges Randprofil.

Die an die flanschartigen Vorsprünge 82a angrenzenden beiden anderen seitlichen Randflächen sind plan. In der Figur ist dies für das in der ersten Halteeinrichtung 6 fixierte Ende des Zwischenstücks 8 zu erkennen. Die Klemmschrauben 12 wirken hier auf eine ebene seitliche Randfläche 86b des Zwischenteils 8 ein. Der zu diesem Ende des Zwischenteils 8 gehörende flanschartige Vorsprung ist in der Figur für das in Draufsicht dargestellte Zwischenteil 8 nur in Form einer Kante zu erkennen.

Die flanschartigen Vorsprünge 82a des Zwischenteils 8 sind in den Klauen 11 einer zweiten Halteeinrichtung 10 gelagert und liegen dort mit ihren konvex gekrümmten Randflächen 84a an einer keilförmigen Anschrägung 16 der Klauen 11 sowie an der Keilfläche 142 eines Klemmkeiles 14 an, der mit Klemmschrauben 13 senkrecht zur Mittenachse 183 der zweiten Halteeinrichtung 10 verschoben werden kann. An dieser zweiten Halteeinrichtung 10 ist eine nur mit ihrem Lagerteil angedeutete Bearbeitungsmaschine 20, wie sie beispielsweise aus dem deutschen Gebrauchsmuster 8905157.2 bekannt ist, fixiert. Die Mittenachse 183 der zweiten Halteeinrichtung 10 legt zugleich die Mittenachse der Bearbeitungsmaschine 20 und damit deren Bearbeitungsebene und Bearbeitungsmitte, d.h. den Drehpunkt eines in der Figur nicht dargestellten Bearbeitungsarmes, fest.

In der Figur ist zu erkennen, daß in der aus der Spanneinrichtung 4, dem Zwischenteil 8 und der ersten und zweiten Halteeinrichtung 6 bzw. 10 gebildeten Einstelleinrichtung drei unterschiedliche Mittenachsen 181, 182 und 183 festgelegt sind, die jeweils durch die erste Halteeinrichtung 6, das Zwischenteil 8 bzw. die zweite Halteeinrichtung 10 definiert sind.In der Darstellung gemäß der Figur fallen diese Mittenachsen 181, 182, 183 mit der Mittenachse 18 des Rohres 2 zusammen. In der Figur ist eine Situation dargestellt, bei der die Stirnfläche des Rohrendes gegen die Senkrechte zur Rohrmittenachse 18 um einen Winkel α geneigt ist.

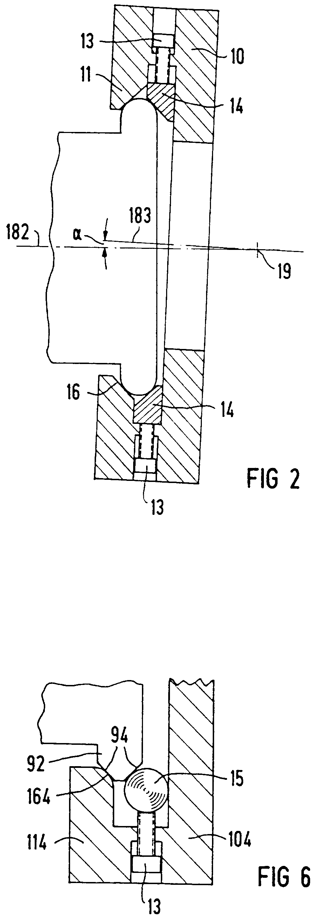

Diese Neigung α kann durch Verschieben der Klemmkeile 14 in der zweiten Halteeinrichtung 10, wie dies in **Figur 2** dargestellt ist, ausgeglichen werden. Die Keilflächen 142 der Klemmkeile 14 wirken dabei auf die konvex gekrümmte Oberfläche 84a der Vorsprünge 82a und bewirken ein Schwenken der gesamten zweiten Halteeinrichtung 10 um eine senkrecht zur Zeichenebene verlaufende zweite Achse 19. Die Mittenachse 183 der zeiten Halteeinrichtung 10 kann auf diese Weise um die Mittenachse 182 des Zwischenteils 8 um denselben Winkel α geschwenkt werden, so daß die an der zweiten Halteeinrichtung 10 fixierte Bearbeitungsmaschine 20 mit ihrer Bearbeitungsebene, die senkrecht zur Mittenachse 183 orientiert ist, parallel zur Stirnfläche des Rohrendes ausgerichtet werden kann.

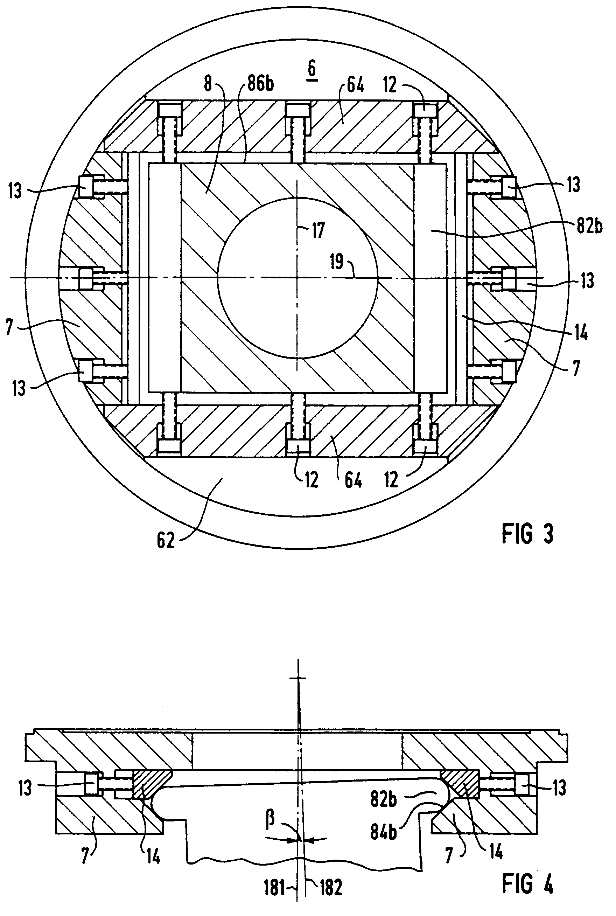

In **Figur 3** ist zu erkennen, daß mit Hilfe der Klemmschrauben 12 eine Verschiebung des Zwischenteils 8 in einer von der ersten Halteeinrichtung 6 senkrecht zu ihrer Mittenachse 181 aufgespannten, zur Zeichenebene parallelen ersten Ebene möglich ist. Durch gleichmäßiges Verstellen der einander gegenüberliegenden, in den Stützleisten 64 geführten Klemmschrauben 12 wird eine Verschiebung des Zwischenteils 8 parallel zu einer ersten Achse 17 bewirkt. Auf der Grundplatte 62 der Halteeinrichtung 6 sind senkrecht zu den Stützleisten 64 Klauen 7 angeordnet, die, in analoger Weise wie in Figur 1 für die Halteeinrichtung 10 gezeigt, einen flanschartigen Vorsprung 82b des Zwischenteils 8 umgreifen. Dieser flanschartige Vorsprung 82b weist ebenso wie der flanschartige Vorsprung 82a (Figuren 1, 2) eine gekrümmte seitliche Randfläche 84b auf. In den Klauen 7 sind Klemmschrauben 13 und Klemmkeile 14 geführt. Ein Verstellen der auf die Klemmkeile 14 wirkenden Klemmschrauben 13 bewirkt somit ein Verdrehen des Zwischenteils 8 um diese erste Achse 17. Dies geht deutlicher aus **Figur 4** hervor, in der in Analogie zu Figur 2 das Zwischenstück 8 relativ zur Mittenachse 181 der ersten Halteeinrichtung 6 um einen Winkel β geschwenkt ist.

Da die flanschartigen Vorsprünge 82a (Fig. 1, 2) am einen Ende des Zwischenteils 8 gegenüber den flanschartigen Vorsprüngen 82b am anderen Ende des Zwischenteils 8 um 90° versetzt angeordnet sind, kann durch Verstellen der Klemmschrauben 13 ein Schwenken des Lagerteils der Bearbeitungsmaschine 20 um zwei zueinander orthogonale Schwenkachsen 17, 19 durchgeführt werden, so daß die Bearbeitungsmaschine 20 mit ihrer Bearbeitungsebene parallel zur Stirnfläche beliebig angeschrägter Rohrenden eingerichtet werden kann. In analoger Weise wie in Figur 3 für das in der ersten Halteeinrichtung 6 eingespannte Ende des Zwischenteils 8 veranschaulicht, kann die zweite Halteeinrichtung 10 relativ zum Zwischenstück in einer zweiten Ebene, die gegen die erste Ebene um den Verstellwinkel α geneigt ist, verschoben werden. Durch die ebenfalls versetzt zueinander angeordneten ebenen seitlichen Randflächen der Enden des Zwischenteils 8 kann die gesamte Bearbeitungsmaschine 20 außerdem in zwei zueinander senkrechte Richtungen verschoben werden, so daß die Bearbeitungsmitte der Bearbeitungsmaschine 20 auf die Mittenachse 18 des Rohres 2 eingestellt werden kann. Diese Einstellarbeiten sind nachträglich bei bereits fest im Rohr 2 fixierter Spannvorrichtung und somit stabil am Rohr 2 gehalteter Bearbeitungsvorrichtung möglich und daher präzise und einfach durchführbar.

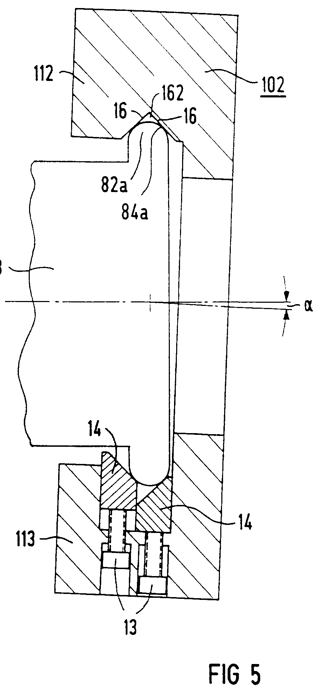

Im Ausführungsbeispiel gemäß **Figur 5** ist eine Halteeinrichtung 102 vorgesehen, deren eine Klaue 112 eine v-förmige Nut 162 enthält, auf deren seitlichen Flanken 16 die im Querschnitt kreisförmig gestaltete Randfläche 86a des flanschartigen Vorsprungs 82a aufliegt. In einer Aussparung der gegenüberliegenden Klaue 113 sind zwei unabhängig voneinander verstellbare Klemmkeile 14 angeordnet, deren Keilflächen einander zugewandt sind und in der Grundstellung eine ebenflalls v-förmige Nut bilden. Durch wechselseitiges Verstellen dieser Keilflächen können in Analogie zu den Ausführungsbeispielen gemäß Figuren 2 und 4 das Zwischenteil 8 und die Halteeinrichtung 102 relativ zueinander geschwenkt werden.

In einer weiteren Ausgestaltung gemäß **Figur 6** ist eine Halteeinrichtung 104 vorgesehen, deren Klauen 114 auf ihrer dem flanschartigen Vorsprung 92 eines Zwischenteiles 9 zugewandten Fläche abgerundet sind. Der flanschartige Vorsprung 92 des Zwischenteils 9 ist an seiner Randfläche keilförmig gestaltet und liegt mit seinen Keilflächen 94 auf der abgerundeten Oberfläche 164 der Klaue 114 und auf der Oberfläche eines konkav geformten, insbesondere kugelförmigen Klemmstückes 15 an. Durch Verschieben dieses Klemmstückes 15 mit Hilfe der Klemmschraube 13 wird ebenfalls ein gegenseitiges Schwenken von Zwischenstück 9 und Halteeinrichtung 104 verursacht.

## Patentansprüche

1. Bearbeitungsvorrichtung zum Bearbeiten eines Endes eines Rohres (2) umfassend eine Einstelleinrichtung mit einer am oder im Rohr (2) verspannbaren Spanneinrichtung (4), gekennzeichnet durch
a) eine an der Spanneinrichtung (4) fixierte erste Halteeinrichtung (6), in der ein Zwischenteil (8) positionierbar gelagert ist, sowie
b) eine auf diesem Zwischenteil (8) positionierbar gelagerte zweite Halteeinrichtung (10), die eine Bearbeitungsmaschine (20) trägt.

2. Bearbeitungsvorrichtung nach Anspruch 1,
**dadurch gekennzeichnet,** daß das Zwischenteil (8) in der ersten Halteeinrichtung (6) schwenkbar um eine erste Achse (17) gelagert ist.

3. Bearbeitungsvorrichtung nach Anspruch 1 oder Anspruch 2,
**dadurch gekennzeichnet,** daß die zweite Halteeinrichtung (10) am Zwischenteil (8) schwenkbar um eine zweite Achse (19) gelagert ist.

4. Bearbeitungsvorrichtung nach einem der vorhergehenden Ansprüche
**dadurch gekennzeichnet,** daß das Zwischenteil (8) in der ersten Halteeinrichtung (6) in einer ersten Ebene verschiebbar gelagert ist.

5. Bearbeitungsvorrichtung nach einem der vorhergehenden Ansprüche,
**dadurch gekennzeichnet,** daß die zweite Halteeinrichtung (10) am Zwischenteil (8) in einer zweiten Ebene verschiebbar gelagert ist.

6. Bearbeitungsvorrichtung nach einem der vorhergehenden Ansprüche,
**dadurch gekennzeichnet,** daß das Zwischenteil (8) an seinen einander gegenüberliegenden Enden mit einem flanschartigen Vorsprung (82a,b) versehen ist.

7. Bearbeitungsvorrichtung nach Anspruch 6,
**dadurch gekennzeichnet,** daß die Halteeinrichtungen (6, 10) jeweils mit einer Klaue (7 bzw. 11) versehen sind, die den flanschartigen Vorsprung (82a,b) des Zwischenteils (8) umgreifen.

8. Bearbeitungsvorrichtung nach Anspruch 7,
**dadurch gekennzeichnet,** daß der flanschartige Vorsprung (82a,b) eine gekrümmte seitliche Randfläche (84a bzw. 84b) aufweist.

9. Bearbeitungsvorrichtung nach Anspruch 8,
**dadurch gekennzeichnet,** daß in den Klauen (7, 11) der Halteeinrichtung (6 bzw. 11) verschiebbar Klemmkeile (14) angeordnet sind, die mit ihrer Keilfläche (142) außermittig am gekrümmten Rand (84a,b) des flanschartigen Vorsprungs (82a bzw 82b) anliegen.

10. Bearbeitungsvorrichtung nach Anspruch 7,
**dadurch gekennzeichnet,** daß die flanschartigen Vorsprünge (92) jeweils eine keilförmig geformte Randfläche (94) aufweisen.

11. Bearbeitungsvorrichtung nach Anspruch 10,
**dadurch gekennzeichnet,** daß in den Klauen (114) der Halteeinrichtung (104) verschiebbar Klemmstücke (15) angeordnet sind, die mit ihrer gekrümmt geformten Oberfläche an der keilförmig geformten Randfläche (94) des flanschartigen Vorsprungs (92) anliegen.

12. Bearbeitungsvorrichtung nach einem der Ansprüche 7 bis 11,
**dadurch gekennzeichnet,** daß die einander gegenüberliegenden Enden des Zwischenteils (8, 9) jeweils eine rechteckige Grundfläche aufweisen, wobei jeweils zwei im Endbereich des Zwischenteils (8, 9) einander gegenüberliegende Randflächen (84a, b, 94) auf flanschartigen Vorsprüngen (82a, b, 92) angeordnet und gekrümmt sind und die beiden anderen seitlichen Randflächen (86a, b) plan sind.

13. Bearbeitungsvorrichtung nach Anspruch 12,
**dadurch gekennzeichnet,** daß die flanschartigen Vorsprünge (82a) am einen Ende und die flanschartigen Vorsprünge (82b) am anderen Ende des Zwischenteils (8) um 90° gegeneinander versetzt angeordnet sind.

## Claims

1. Machining device for machining an end of a pipe (2), comprising an adjusting device having a clamping device (4) which can be stayed on or in the pipe (2), characterised by a first holding device (6) which is fixed on the clamping device (4) and in which an intermediate portion (8) is mounted in a manner such that it can be positioned, as well as a second holding device (10), which is mounted on this intermediate portion (8) in a manner such that it can be positioned and supports a machine tool (20).

2. Machining device according to claim 1, characterised in that the intermediate portion (8) is mounted in the first holding device (6) in a manner such that it can be pivoted around a first axis (17).

3. Machining device according to claim 1 or claim 2, characterised in that the second holding device (10) is mounted on the intermediate portion (8) in a manner such that it can be pivoted around a second axis (19).

4. Machining device according to one of the preceding claims, characterised in that the intermediate portion (8) is mounted in the first holding device (6) in a manner such that it can be shifted in a first plane.

5. Machining device according to one of the preceding claims, characterised in that the second holding device (10) is mounted on the intermediate portion (8) in a manner such that it can be shifted in a second plane.

6. Machining device according to one of the preceding claims, characterised in that the intermediate portion (8) is provided, on its ends which are opposite each other, with a flange-like projection (82a, b).

7. Machining device according to claim 6, characterised in that the holding devices (6, 10) are each provided with a claw (7 and 11 respectively), which claws surround the flange-like projection (82a, b) of the intermediate portion (8).

8. Machining device according to claim 7, characterised in that the flange-like projection (82a, b) has a curved lateral edge face (84a and 84b respectively).

9. Machining device according to claim 8, characterised in that arranged in the claws (7, 11) of the holding device (6 and 11 respectively) are shiftable clamping wedges (14), the wedge face (142) of which rests eccentrically on the curved edge (84a, b) of the flange-like projection (82a and 82b respectively).

10. Machining device according to claim 7, characterised in that the flange-like projections (92) each have a wedge-shaped edge face (94).

11. Machining device according to claim 10, characterised in that arranged in the claws (114) of the holding device (104) are shiftable clamping pieces (15), the curved surface of which rests on the wedge-shaped edge face (94) of the flange-like projection (92).

12. Machining device according to one of the claims 7 to 11, characterised in that the opposing ends of the intermediate portion (8, 9) each have a rectangular base surface, wherein in each case two edge faces (84a, b, 94) in the end region of the intermediate portion (8, 9), which edge faces are opposite each other, are arranged on flange-like projections (82a, b, 92) and are curved, and the two other lateral edge faces (86a, b) are planar.

13. Machining device according to claim 12, characterised in that the flange-like projections (82a) at the one end and the flange-like projections (82b) at the other end of the intermediate portion (8) are arranged in a manner such that they are offset by 90° with respect to each other.

## Revendications

1. Dispositif d'usinage d'une extrémité d'un tube (2), qui comprend un dispositif de réglage comportant un dispositif (4) de serrage pouvant être serré sur le tube (2) ou dans le tube (2), caractérisé par
a) un premier dispositif (6) de maintien qui est fixé au dispositif (4) de serrage et dans lequel est montée, d'une manière qui peut être mise en position, une pièce (8) intermédiaire, ainsi que par
b) un deuxième dispositif (10) de maintien qui est monté, d'une manière qui peut être mise en position, sur cette pièce (8) intermédiaire et qui porte une machine (20) d'usinage.

2. Dispositif d'usinage suivant la revendication 1, caractérisé en ce que la pièce (8) intermédiaire est montée basculante par rapport à un premier axe (17) dans le premier dispositif (6) de maintien.

3. Dispositif d'usinage suivant la revendication 1 ou 2, caractérisé en ce que le deuxième dispositif (10) de maintien placé sur la pièce (8) intermédiaire est monté basculant par rapport à un deuxième axe (19).

4. Dispositif d'usinage suivant l'une des revendications précédentes, caractérisé en ce que la pièce (8) intermédiaire montée dans le premier dispositif (6) de maintien est montée coulissante dans un premier plan.

5. Dispositif d'usinage suivant l'une des revendications précédentes, caractérisé en ce que le deuxième dispositif (10) de maintien placé sur la pièce (8) intermédiaire est monté coulissant dans un deuxième plan.

6. Dispositif d'usinage suivant l'une des revendications précédentes caractérisé en ce que la pièce (8) intermédiaire est munie à ses extrémités opposées l'une à l'autre d'une partie (82a, 82b) en saillie en forme de flanc.

7. Dispositif d'usinage suivant la revendication 6, caractérisé en ce que les dispositifs (6, 10) de maintien sont munis chacun d'une griffe (respectivement 7 et 11) qui entourent la partie (82a, 82b) en saillie en forme de flanc de la pièce (8) intermédiaire.

8. Dispositif d'usinage suivant la revendication 7, caractérisé en ce que la partie (82a, 82b) en saillie en forme de flanc comporte une surface (respectivement 84a et 84b) latérale de bord incurvée.

9. Dispositif d'usinage suivant la revendication 8, caractérisé en ce qu'il est monté coulissant dans les griffes (7,11) du dispositif (6 et 11) de maintien, des cales (14) de serrage, qui s'appliquent par leur surface (142) cunéiforme, à l'extérieur du milieu, au bord (84a, 84b) incurvé de la partie (82a et 82b) en saillie en forme de flanc.

10. Dispositif d'usinage suivant la revendication 7, caractérisé en ce que la partie (92) en saillie en forme de flanc comporte une surface (94) latérale de bord configurée de manière cunéiforme.

11. Dispositif d'usinage suivant la revendication 10, caractérisé en ce qu'il est monté coulissant dans les griffes (114) du dispositif (104) de maintien, des pièces (15) de serrage, qui s'appliquent par leur surface configurée de manière incurvée à la surface (94) latérale de bord, configurée de manière cunéiforme, de la partie (92) en saillie en forme de flanc.

12. Dispositif d'usinage suivant l'une des revendications 7 à 11, caractérisé en ce que les extrémités opposées l'une à l'autre de la pièce (8, 9) intermédiaire ont une surface rectangulaire, deux surfaces (84a, 84b, 94) de bord opposées l'une à l'autre dans la région d'extrémité de la pièce (8, 9) intermédiaire étant montés sur des parties (82a, 82b, 92) en saillie en forme de flanc et étant incurvées, et les deux autres surfaces (86a, 86b) de bord étant planes.

13. Dispositif d'usinage suivant la revendication 12, caractérisé en ce que les parties (82a) en saillie en forme de flanc situées à une extrémité de la pièce (8) intermédiaire et les parties (82b) en saillie en forme de flanc situées à l'autre extrémité sont décalées les unes par rapport aux autres de 90°.
